# EUROPÄISCHE PATENTANMELDUNG

(11) **EP 1 811 099 A2**
(43) Veröffentlichungstag der Anmeldung: **25.07.2007**
(21) Anmeldenummer: 06125270.6
(22) Anmeldetag: 01.12.2006
(51) Int. Cl.: E04C 2/04

(54) **Bauplatte zur Herstellung eines Eckelements**

(30) Priorität: 20.01.2006 DE 102006002910
(71) Anmelder: Knauf Gips KG, 97346 Iphofen (DE)
(72) Erfinder: Flennert, Bruno, 97348, Willanzheim (DE); Schäfer, Siegfried, 91483, Stierhöfstetten (DE)
(74) Vertreter: Zech, Stefan Markus

(57) **Zusammenfassung**

Die vorliegende Erfindung betrifft eine Bauplatte mit einer Vorderseite (17) sowie einer Rückseite (18) zur Herstellung eines Eckelementes, wobei die Bauplatte mindestens einen Kern (11) sowie mindestens eine die Vorderseite (17) ausbildende erste Deckschicht (12) umfasst, und wobei eine längs verlaufende Nut (13) mit zwei gegenüberliegenden Nutwänden (19, 20) sowie einem dazwischen angeordneten Nutgrund (21) von der der ersten Deckschicht (12) gegenüberliegenden Rückseite (18) her in die Bauplatte eingearbeitet ist und die Bauplatte in einen ersten Plattenabschnitt (14) und einen zweiten Plattenabschnitt (15) unterteilt. Dabei ist vorgesehen, dass der erste Plattenabschnitt (14) und der zweite Plattenabschnitt (15) im Bereich der Nut (13) im Wesentlichen nur durch die den ersten Plattenabschnitt (14) und den zweiten Plattenabschnitt (15) übergreifende Deckschicht (12) miteinander verbunden sind. Um zu erreichen, dass die letztendlich ausgebildete Kante des Eckelements ein abgerundetes bzw. gefastes Profil aufweist, ist erfindungsgemäß vorgesehen, dass im Bereich des Nutgrundes (21) fest mit der Deckschicht (12) verbunden mindestens ein aus dem Material des Kerns (11) gebildeter Keil (16) mit einer gegenüber der Tiefe der Nut (13) geringeren Höhe verbleibt.

## Beschreibung

Die vorliegende Erfindung betrifft eine Bauplatte mit einer Vorderseite sowie einer Rückseite zur Herstellung eines Eckelements, wobei die Bauplatte mindestens einen Kern sowie mindestens eine die Vorderseite ausbildende erste Deckschicht umfasst, und wobei eine längs verlaufende Nut mit zwei gegenüberliegenden Nutwänden sowie einem dazwischen angeordneten Nutgrund von der der ersten Deckschicht gegenüberliegenden Rückseite her in die Bauplatte eingearbeitet ist und die Bauplatte in einen ersten Plattenabschnitt und einen zweiten Plattenabschnitt unterteilt, wobei der erste Plattenabschnitt und der zweite Plattenabschnitt im Bereich der Nut im Wesentlichen nur durch die den ersten Plattenabschnitt und den zweiten Plattenabschnitt übergreifende Deckschicht miteinander verbunden sind.

Des Weiteren betrifft die vorliegende Erfindung ein aus einer Bauplatte gebildetes Eckelement sowie ein Verfahren zur Herstellung eines Eckelements aus einer Bauplatte mit einer Vorderseite sowie einer Rückseite, wobei die Bauplatte mindestens einen Kern sowie mindestens eine die Vorderseite ausbildende erste Deckschicht umfasst, wobei eine längs verlaufende Nut mit zwei gegenüberliegenden Nutwänden sowie einem dazwischen angeordneten Nutgrund von der der ersten Deckschicht gegenüberliegenden Rückseite her in die Bauplatte eingearbeitet ist und die Bauplatte in einen ersten Plattenabschnitt und einen zweiten Plattenabschnitt unterteilt, wobei der erste Plattenabschnitt und der zweite Plattenabschnitt im Bereich der Nut im Wesentlichen nur durch die den ersten Plattenabschnitt und den zweiten Plattenabschnitt übergreifende Deckschicht miteinander verbunden sind, wobei im Bereich des Nutgrundes fest mit der Deckschicht verbunden mindestens ein auf dem Material des Kerns ausgebildeter Keil mit einer gegenüber der Tiefe der Nut geringeren Höhe verbleibt.

Derartige Bauplatten bzw. Eckelemente sowie ein derartiges Verfahren zur Herstellung eines Eckelements sind dem Prinzip nach aus dem Stand der Technik bekannt. Bauplatten dieser Art kommen beispielsweise im Bauwesen insbesondere zur Isolierung und Verkleidung von Wänden oder Decken, zur Ausbesserung bei schadhaften Wänden und Begradigungen unebener Flächen zum Einsatz. In der Praxis werden dabei in der Regel mehrere Bauplatten nebeneinander angeordnet und anschließend die sich zwischen aneinander angrenzenden Platten befindlichen Fugen ausgespachtelt bzw. vergipst. Man spricht in diesem Zusammenhang auch von einem Verfugen der Bauplatten.

Auch ist aus dem Stand der Technik bekannt, Bauplatten, insbesondere Gipskartonplatten, zur optischen Verkleidung, beispielsweise von Installations- oder Heizungsrohren, Elektrokabeln und anderen technischen Einrichtungen, zu verwenden. In diesem Fall ist es erforderlich, aus der Bauplatte eine entsprechende Verkofferung auszubilden. Im einzelnen ist es zum Herstellen einer derartigen Verkofferung notwendig, aus einer oder mehreren Bauplatten Kantenelemente auszubilden. Insbesondere müssen entsprechende Eckelemente aus der Bauplatte gebildet werden. Üblicherweise erfolgt dies, indem in die Bauplatte eine längs verlaufende Nut mit zwei gegenüberliegenden Nutwänden eingebracht wird. Diese eingearbeitete längs verlaufende Nut teilt dann die Bauplatte in einen ersten Plattenabschnitt, der beispielsweise eine erste Seitenwand der Verkofferung bildet, und in einen zweiten Plattenabschnitt, der zum Ausbilden der zweiten Seitenwand der Verkofferung dienen kann. Der erste Plattenabschnitt und der zweite Plattenabschnitt sind nach dem Einbringen der längs verlaufenden Nut im Bereich der Nut im Wesentlichen nur miteinander über eine den ersten Plattenabschnitt und den zweiten Plattenabschnitt übergreifende Deckschicht verbunden. Bei Gipskartonplatten handelt es sich bei dieser Deckschicht beispielsweise um den bereits an der Gipskartonplatte vorgesehenen Kartonageüberzug.

Nach dem Ausbilden der längs verlaufenden Nut ist es nach dem Stand der Technik erforderlich, die beiden gegenüberliegenden Nutwände mit einem Verbindungsmittel, insbesondere einer Verbindungssubstanz, wie beispielsweise Leim, zu beschichten. Anschließend wird der erste Plattenabschnitt und der zweite Plattenabschnitt aufeinander zu verschwenkt, bis sie einen durch den Verlauf der Nutwände vorbestimmten Winkel erreichen und somit die gegenüberliegenden Nutwände bündig aufeinander liegen und miteinander verleimt werden. Indem die jeweiligen Winkel zwischen der Rückseite der Bauplatte und den Nutwänden der eingebrachten Nut entsprechend gewählt werden, können Eckelemente mit unterschiedlichen Winkelbereichen gewählt werden.

Allerdings hat sich als nachteilig erwiesen, dass bei dem aus dem Stand der Technik bekannten und vorstehend erläuterten Verfahren zur Herstellung eines Eckelements aus einer Bauplatte die entstehende Ecke eine relativ scharfe Kante aufweist. Solche spitz zulaufenden Ecken bzw. Kanten sind allgemein nicht erwünscht, da die Gefahr besteht, dass das Eckelement der Bauplatte beispielsweise durch Stöße leicht beschädigt werden kann. Neben der Anfälligkeit gegenüber Beschädigungen spielen aber auch ästhetische Gründe eine Rolle.

Um die Nachteile zu umgehen, die im Zusammenhang mit einer scharfen Kante stehen, ist aus dem Stand der Technik bekannt, beim Ausbilden der längs verlaufenden Nut in dem zwischen den gegenüberliegenden Nutwänden vorgesehenen Nutgrund eine kreisförmige Aussparung vorzusehen. Diese Aussparung kann in die Vorderseite der Bauplatte entsprechend eingefräst oder andersartig eingebracht werden. Beim Verschwenken des ersten Plattenabschnitts und des zweiten Plattenabschnitts zum Ausbilden des Eckelements kann dann in die kreisförmige Aussparung beispielsweise ein entsprechend ausgebildeter Rundstab eingesetzt werden, so dass das anschließend ausgebildete Eckelement eine Kante aufweist, die durch den Rundstab entsprechend abgerundet ist.

Das Vorsehen eines Rundstabes in einer entsprechend zusätzlich ausgebildeten Nut im Nutgrund der in der Bauplatte ausgebildeten längs verlaufenden Nut ermöglicht zwar, dass die mit dem Eckelement ausgebildete Kante entsprechend abgerundet wird, allerdings ist die Herstellung eines solchen Eckelements relativ aufwendig. Dies ist insbesondere dadurch bedingt, dass mit dem Rundstab zusätzliches Material, welches verschieden von dem Material der Bauplatte ist, in das Eckelement eingebracht werden muss. Insbesondere handelt es sich hierbei um ein relativ kostenaufwendiges und aus herstellungstechnischer Sicht relativ aufwendiges Verfahren, da zusätzliche Arbeitsschritte von Nöten sind.

Für Wand- und Deckenbekleidungen auf Unterkonstruktionen, Vorsatzschalen, Trennwände und Unterdecken für vorgefertigte Bauteile etc. werden in der Regel Gipskartonplatten eingesetzt, die aus einem gipsartigen oder gipshaltigen Kern mit beidseitigem Kartonage-Bezug bestehen, wobei der Kartonage-Bezug üblicherweise einen festhaftenden Spezialkarton aufweist, der den gipshaltigen Kern ummantelt. In den Fällen, wenn derartige Wand- und Deckenbekleidungen bzw. Vorsatzschalen oder Trennwände gewisse Anforderungen an den Feuerschutz erfüllen sollen, werden heutzutage Feuerschutzplatten eingesetzt, deren Gipskern zusätzlich verfestigt und zur Verbesserung des Gefügezusammenhalts unter Brandeinwirkung mit Glasfasern armiert ist.

Des Weiteren sind so genannte "Fireboard"-Platten bekannt. Hierbei handelt es sich um Bauplatten, deren Flächen und Längskanten mit Fasern aus Glas, Kunststoff oder ähnlichem Material ummantelt sind. Das Glasfaservlies kann auch mit Gips beschichtet sein. Bei derartigen Feuerschutzplatten, die aus einem Gipskern bestehen, und deren Ummantelung ein entsprechendes Gewebe umfasst, ist es allerdings nicht möglich, das aus dem Stand der Technik bekannte und vorstehend beschriebene Verfahren zur Herstellung eines Eckelements einzusetzen, da dass üblicherweise eingesetzte Fasermaterial der Deckschicht einen Knick um 90 Grad in der Regel nicht verkraftet. Die dabei in dem Fasermaterial auftretenden Zugkräfte führen zu einer Zerstörung der Gewebeschicht, infolgedessen beispielsweise die Glasfaservlies-Ummantelung brüchig bzw. vollkommen zerstört wird und somit die Anforderungen an den Feuerschutz nicht mehr hinreichend erfüllt werden können. Demnach war das Ausbilden von Kanten bei Feuerschutzplatten ("Fire-board"-Platten) bisher - wenn überhaupt - nur mit hohem Aufwand durchzuführen.

Ausgehend von der vorstehend erläuterten Problemstellung liegt der vorliegenden Erfindung nun die Aufgabe zugrunde, eine Bauplatte zur Herstellung eines Eckelements der eingangs genannten Art anzugeben, mit der eine Kantenausbildung an Gipskartonplatten vereinfacht werden soll, wobei die letztendlich ausgebildete Kante ein abgerundetes bzw. gefastes Profil aufweist.

Eine weitere Aufgabe der vorliegenden Erfindung liegt darin, eine Bauplatte zur Herstellung eines Eckelements anzugeben, wobei die Bauplatte eine Feuerschutzplatte ist, die mit einem Gewebevlies ummantelt ist, und wobei bei der Herstellung des Eckelements das Gewebevlies nicht beschädigt wird.

Eine weitere Aufgabe der vorliegenden Erfindung liegt darin, ein Eckelement anzugeben, dass aus einer Gipskartonplatte oder einer Feuerschutzplatte gebildet ist.

Des Weiteren liegt der vorliegenden Erfindung die Aufgabe zugrunde, ein Verfahren zur Herstellung eines entsprechenden Eckelements anzugeben.

Hinsichtlich der Aufgabe betreffend die Bauplatte zur Herstellung eines Eckelements ist in einem ersten Aspekt der Erfindung vorgesehen, dass bei der Bauplatte der eingangs genannten Art im Bereich des Nutgrundes fest mit der Deckschicht verbunden mindestens ein aus dem Material des Kerns gebildeter Keil mit einer gegenüber der Tiefe der Nut geringeren Höhe verbleibt.

Im Hinblick auf die Aufgabe der Erfindung, eine Bauplatte zur Herstellung eines Eckelements anzugeben, wobei die Bauplatte eine mit einem Gewebevlies ummantelte Feuerschutzplatte bzw. Gipsfaser-Bauplatte ist, und wobei bei der Herstellung des Eckelements das Gewebevlies nicht beschädigt wird, ist gemäß einem zweiten Aspekt der Erfindung eine Bauplatte der eingangs genannten Art vorgesehen, wobei die Deckschicht der Bauplatte ein Gewebe, insbesondere ein Kunststoff-, Glasfaser-, Polypropylen- oder textiles Gewebe, umfasst, und wobei im Bereich des Nutgrundes ein Keil oder ein Profilelement vorgesehen bzw. eingesetzt ist.

Die erfindungsgemäßen Lösungen gemäß dem ersten und dem zweiten Aspekt weisen wesentliche Vorteile gegenüber den aus dem Stand der Technik bekannten und vorstehend beschriebenen Bauplatten zur Herstellung eines Eckelements auf. Insbesondere können die erfindungsgemäßen Bauplatten unabhängig davon, ob es sich hierbei um eine Gipskartonplatte oder eine Gipsfaserplatte handelt, verwendet werden, um ein Eckelement auszubilden, wobei die letztendlich ausgebildete Kante des Eckelements ein abgerundetes bzw. gefastes Profil aufweist. Dieses ist dadurch möglich, dass beim Ausbilden der längs verlaufenden Nut im Bereich des Nutgrundes ein aus dem Material des Kerns der Bauplatte gebildeter Keil mit einer gegenüber der Tiefe der Nut geringeren Höhe verbleibt. Aus herstellungstechnischer Sicht sind zum Ausbilden der längs verlaufenden Nut mit dem im Bereich des Nutgrundes verbleibenden Keil keine weiteren Verfahrensschritte erforderlich. Es ist demnach möglich, die Nut mit dem verbleibenden Keil im Bereich des Nutgrundes im Verlauf eines Fräsevorganges auszubilden. Dabei wird die Geometrie sowie der Grad der Abrundung der letztendlich ausgebildeten Kante des Eckelements sowohl durch die Nut als auch durch den im Bereich des Nutgrundes gebildeten Keil bestimmt. So wird beispielsweise eine stärker abgerundete bzw. gefaste Kante erreicht, wenn der Bereich des Nutgrundes, in welchem der Keil mit einer gegenüber der Tiefe der Nut geringeren Höhe verbleibt, entsprechend größer gewählt ist.

Als weiterer Vorteil ist insbesondere zu nennen, dass bei der erfindungsgemäßen Lösung kein weiteres Material zum Ausbilden einer abgerundeten Ecke eingebracht werden muss. Der Keil, der im Bereich des Nutgrundes der längs verlaufenden Nut verbleibt, ist aus dem Kern der Bauplatte gebildet. Demnach wird mit der Erfindung eine kostengünstige Lösung zur Ausbildung eines Eckelements angegeben.

Dadurch, dass bei der erfindungsgemäßen Lösung im Bereich des Nutgrundes fest mit der Deckschicht verbunden mindestens ein aus dem Material des Kerns gebildeter Keil vorgesehen ist, kann des weiteren in vorteilhafter Weise erreicht werden, dass im ausgebildeten Eckelement die in den einzelnen Plattenabschnitten der Bauplatte und insbesondere die im gipshaltigen Kern der einzelnen Plattenabschnitte auftretenden Schub- und Scherkräfte in definierter und vorhersagbarer Weise von dem einen Plattenabschnitt über den zumindest einen Keil auf den anderen Plattenabschnitt geleitet werden. Dies ist insbesondere dadurch möglich, dass der zumindest eine Keil fest mit der Deckschicht verbunden ist, während gleichzeitig die beiden Plattenabschnitte über diese Deckschicht miteinander verbunden sind. Durch das definierte Ableiten des im ausgebildeten Eckelement auftretenden Kraftflusses über den zumindest einen Keil können Materialermüdungen und insbesondere Rissbildungen vorgebeugt werden. Mit der erfindungsgemäßen Lösung wird demnach eine Bauplatte zur Herstellung eines Eckelementes angegeben, wobei sich das ausgebildete Eckelement insbesondere auch dadurch auszeichnet, dass es besonders robust und insbesondere im Hinblick auf angreifende Schub- und Scherkräfte äußerst widerstandsfähig ist. Das Eckelement eignet sich somit auch für den Einsatz als tragendes Element.

Im Hinblick auf Gipsfaserplatten ist mit der vorliegenden Erfindung der wesentliche Vorteil erzielbar, dass nunmehr auch solche Platten, bei welchen Fasermaterial in der Deckschicht eingearbeitet ist, zu Eckelementen verarbeitet werden können. Wesentlich ist, dass durch das Vorsehen des im Bereich des Nutgrundes gebildeten Keils die letztendlich ausgebildete Kante ein abgerundetes Profil aufweist, so dass die im Bereich der Krümmung auftretenden Zugkräfte über den gesamten Krümmungsbereich verteilt und somit örtlich gesehen deutlich reduziert werden können. Eine Zerstörung der Gewebeschicht beim Ausbilden eines derartigen Eckelementes kann somit auch bei Gipsfaserplatten zuverlässig verhindert werden.

In einem weiteren Aspekt der vorliegenden Erfindung wird ein Verfahren zur Herstellung eines Eckelements aus einer Bauplatte angegeben, wobei die Bauplatte eine Vorderseite und eine Rückseite aufweist, und wobei die Bauplatte mindestens einen Kern sowie mindestens eine die Vorderseite ausbildende erste Deckschicht umfasst. Dabei ist in die Bauplatte eine längs verlaufende Nut mit zwei gegenüberliegenden Nutwänden sowie einem dazwischen angeordneten Nutgrund von der der ersten Deckschicht gegenüberliegenden Rückseite her eingearbeitet, so dass die Bauplatte in einen ersten Plattenabschnitt und einen zweiten Plattenabschnitt unterteilt wird. Bei der Bauplatte ist des weiteren vorgesehen, dass der erste Plattenabschnitt und der zweite Plattenabschnitt im Bereich der Nut im Wesentlichen nur durch die den ersten Plattenabschnitt und den zweiten Plattenabschnitt übergreifende Deckschicht miteinander verbunden sind, wobei im Bereich des Nutgrundes fest mit der Deckschicht verbunden mindestens ein aus dem Material des Kerns gebildeter Keil mit einer gegenüber der Tiefe der Nut geringeren Höhe verbleibt.

Das Verfahren gemäß dem dritten Aspekt der Erfindung zeichnet sich durch die Verfahrensschritte aus, dass ein Verbindungsmittel, insbesondere eine Verbindungssubstanz wie beispielsweise Leim, in die längs verlaufende Nut eingebracht wird, und dass der erste Plattenabschnitt und der zweite Plattenabschnitt so weit aufeinander zu verschwenkt werden, bis ein insbesondere durch den Verlauf der Nutwände vorbestimmter Winkel erreicht ist, so dass erster Plattenabschnitt und zweiter Plattenabschnitt in dieser Anordnung in der Ausbildung eines Eckelements gegeneinander fixiert werden.

In einem weiteren Aspekt der Erfindung wird ein Verfahren zur Herstellung eines Eckelements aus einer Bauplatte angegeben, wobei die Bauplatte eine Vorderseite sowie eine Rückseite aufweist, und wobei die Bauplatte mindestens einen Kern sowie mindestens eine die Vorderseite ausbildende erste Deckschicht umfasst, wobei eine längs verlaufende Nut mit zwei gegenüberliegenden Nutwänden sowie einem dazwischen angeordneten Nutgrund von der der ersten Deckschicht gegenüberliegenden Rückseite her in die Bauplatte eingearbeitet ist und die Bauplatte in einen ersten Plattenabschnitt und einen zweiten Plattenabschnitt unterteilt. Dabei ist vorgesehen, dass der erste Plattenabschnitt und der zweite Plattenabschnitt im Bereich der Nut im Wesentlichen nur durch die den ersten Plattenabschnitt und den zweiten Plattenabschnitt übergreifende Deckschicht miteinander verbunden sind, wobei im Bereich des Nutgrundes ein Keil oder ein Profilelement vorgesehen bzw. eingesetzt ist und wobei die Deckschicht ein Gewebe, insbesondere Kunststoff-, Glasfaser-, Polypropylen oder textiles Gewebe umfasst.

Das Verfahren gemäß diesem Aspekt zeichnet sich durch die Verfahrensschritte aus, dass ein Verbindungsmittel, insbesondere eine Verbindungssubstanz wie beispielsweise Leim, in die längs verlaufende Nut eingebracht wird, und dass der erste Plattenabschnitt und der zweite Plattenabschnitt so weit aufeinander zu verschwenkt werden, bis ein insbesondere durch den Verlauf der Nutwände vorbestimmter Winkel erreicht ist, so dass der erste Plattenabschnitt und der zweite Plattenabschnitt in dieser Anordnung in der Ausbildung eines Eckelements gegeneinander fixiert werden.

Die Vorteile der beiden zuvor genannten Verfahren zur Ausbildung eines Eckelements aus einer Gipskarton-Bauplatte bzw. einer Gipsfaser-Bauplatte liegen auf der Hand: insbesondere ist es in einem Arbeitsschritt (Fräsvorgang) möglich, die zum Ausbilden eines Eckelements aus einer ebenen Bauplatte erforderliche längs verlaufende Nut einzuarbeiten, wobei beim Wegfräsen des Kernmaterials der Bauplatte bewusst im Bereich des Nutgrundes ein Keil aus dem Material des Kerns mit einer bestimmten Geometrie und Höhe verbleibt. Somit wird mit den erfindungsgemäßen Verfahren eine besonders leicht zu realisierende und dabei effektive Möglichkeit zur Herstellung eines Eckelements aus einer Gipskarton-Bauplatte sowie aus einer Gipsfaser-Bauplatte angegeben, wobei das letztendlich ausgebildete Eckelement eine abgerundete bzw. gefaste Kante aufweist, und wobei - im Falle einer Feuerschutzbauplatte - die Anforderungen an den Brandschutz nach wie vor erfüllt werden.

Vorteilhafte Weiterentwicklungen der erfindungsgemäßen Gipskartonbauplatte und der erfindungsgemäßen Gipsfaser-Bauplatte (im nachfolgenden kurz "Bauplatte" genannt) sind in den Unteransprüchen angegeben.

In bevorzugter Weise ist vorgesehen, dass der Keil der im Bereich des Nutgrundes vorgesehen ist, eine Höhe zwischen 5% und 20%, vorzugsweise etwa 10% der Tiefe der Nut aufweist. Hierbei handelt es sich um Größenangaben hinsichtlich des Keils, bei denen zum einen in zuverlässiger Weise sichergestellt werden kann, dass im zusammengebauten Zustand des Eckelements der Keil sicher und stabil an den beiden verschwenkten Nutwänden der längs verlaufenden Nut befestigt wird, wobei andererseits die Stabilität des ausgebildeten Eckelements nicht beeinflusst wird. Insbesondere kann durch die Größe des Bereichs des Nutgrundes, in welchem der Keil beim Ausbilden der längs verlaufenden Nut verbleibt bzw. in welchem der Keil vorgesehen oder eingesetzt wird, der Grad der Abrundung bzw. Anfasung der letztendlich ausgebildeten Kante des Eckelements bestimmt werden. Selbstverständlich sind hier aber auch andere Größenangaben des Keils denkbar.

Besonders bevorzugt weist der Keil eine im Wesentlichen dreieckförmige Querschnittsform auf. Dies hat insbesondere im Hinblick auf die Fertigung gewisse Vorteile, da dreieckförmige Keile besonders einfach ausgefräst werden können. In vorteilhafter Weise ist dabei die Querschnittsformgebung des Keiles symmetrisch ausgebildet. Auch hier sind selbstverständlich andere Querschnittsformen des Keiles denkbar.

Um zu erreichen, dass durch ein Verschwenken des ersten Plattenabschnittes und des zweiten Plattenabschnittes ein Eckelement ausgebildet werden kann, ist in einer besonders bevorzugten Realisierung vorgesehen, dass die Nutwände jeweils einen äußeren Abschnitt sowie einen inneren Abschnitt umfassen, wobei die äußeren und inneren Abschnitte gegenüber der ersten Deckschicht eine jeweils unterschiedliche Neigung aufweisen. Der innere Abschnitt der Nutwände ist in vorteilhafter Weise entsprechend des zugehörigen Keilabschnittes ausgebildet.

In einer besonders bevorzugten Realisierung der zuletzt genannten Ausführungsform, bei welcher die Nutwände jeweils einen äußeren Abschnitt sowie einen inneren Abschnitt aufweisen, ist vorgesehen, dass der Keil eine erste Seitenfläche sowie eine zweite Seitenfläche aufweist, wobei die Länge der ersten Seitenfläche bzw. der zweiten Seitenfläche jeweils der Länge des zugeordneten inneren Abschnittes der zugeordneten Nutwand entspricht. Hierbei handelt es sich um eine besonders einfach zu realisierende aber dennoch effektive Art und Weise, aus der Bauplatte ein Eckelement zu bilden.

Schließlich ist in einer besonders bevorzugten Ausführungsform vorgesehen, dass der erste Plattenabschnitt und der zweite Plattenabschnitt in einem vorbestimmten Winkel, insbesondere einen 90°-Winkel, über die Nutwände, sowie den dazwischen befindlichen Keil, bzw. das dort vorgesehene bzw. eingesetzte Profilelement, sowie über eine eingebrachte Verbindungssubstanz gegeneinander festgelegt sind.

Im Folgenden wird eine bevorzugte Ausführungsform der erfindungsgemäßen Bauplatte anhand der Figuren näher beschrieben.

Es zeigen:
- Fig. 1a a: eine erste bevorzugte Ausführungsform der erfindungsgemäßen Bauplatte zur Herstellung eines Eckelements;
- Fig. 1b: ein aus der Bauplatte gemäß Fig. 1a ausgebildetes Eckelement;
- Fig. 2a: eine zweite bevorzugte Ausführungsform der erfindungsgemäßen Bauplatte zur Herstellung eines Eckelements; und
- Fig. 2b: ein aus der Bauplatte gemäß Fig. 2a ausgebildetes Eckelement.

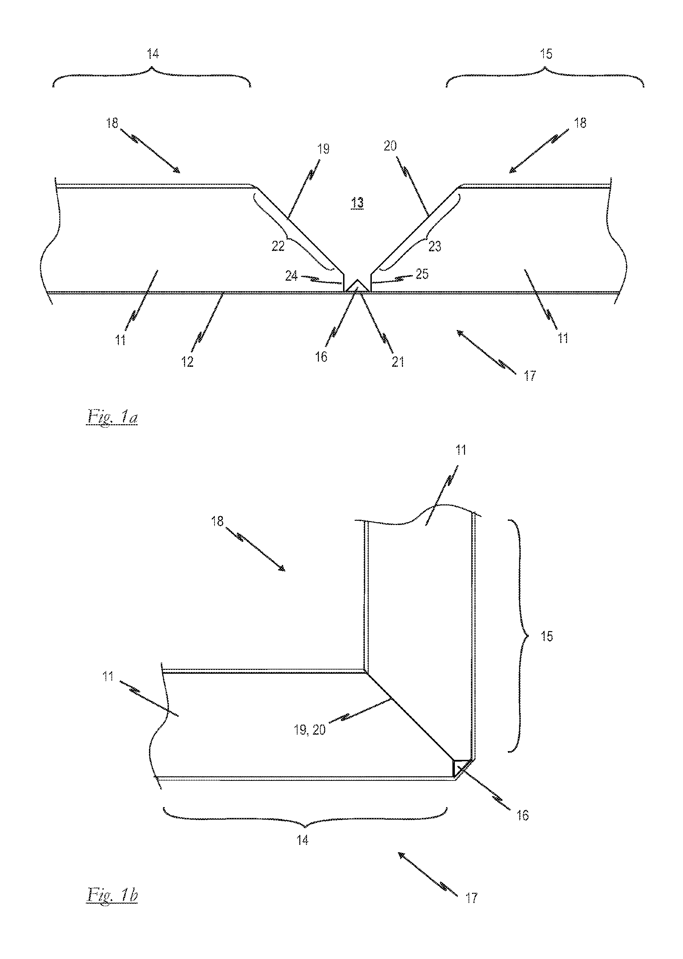

Fig. 1a zeigt eine erste bevorzugte Ausführungsform der erfindungsgemäßen Bauplatte. Die Bauplatte, die entweder eine handelsübliche Gipskarton-Bauplatte oder aber auch eine Feuerschutz-Bauplatte sein kann, weist eine Vorderseite 17 sowie eine Rückseite 18 auf. Zwischen der Vorderseite 17, die durch eine erste Deckschicht 12 gebildet wird, welche entweder ein Kartonage-Überzug oder aber auch ein Faservlies sein kann, ist ein Kern aus beispielsweise einem gipshaltigen oder gipsartigen Material vorgesehen.

Wie dargestellt, ist in der Bauplatte eine in Papierrichtung verlaufende Längsnut 13 ausgebildet. Das Ausbilden dieser Nut 13 ist beispielsweise durch Fräsung möglich. Die längs verlaufende Nut 13 weist zwei gegenüberliegende Nutwände 19 und 20 auf. Zwischen den Nutwänden befindet sich der Nutgrund 21, wobei im Bereich des Nutgrundes 21 fest mit der Deckschicht 12 ein aus dem Material des Kerns 11 gebildeter Keil stehen geblieben ist.

Anhand der Fig. 1a ist offensichtlich, dass die Nut 13 von der der ersten Deckschicht 12 gegenüberliegenden Rückseite 18 her in die Bauplatte eingearbeitet wurde. Diese Nut 13 teilt dabei die Bauplatte in einen ersten Plattenabschnitt 14 und in einen zweiten Plattenabschnitt 15 ein, wobei der erste und zweite Plattenabschnitt 14 und 15 im Bereich der Nut 13 im Wesentlichen nur durch die den ersten Plattenabschnitt 14 und den zweiten Plattenabschnitt 15 übergreifende Deckschicht 12 miteinander verbunden sind. Wie bereits angedeutet, kann die Deckschicht 12 aus dem Kartonage-Überzug der Gipskartonplatte bzw. dem Faservliesüberzug der Gipsfaserplatte bestehen.

Der Fig. 1a ist ebenfalls zu entnehmen, dass der im Bereich des Nutgrundes 21 fest mit der Deckschicht 12 verbundene aus dem Material des Kerns 11 gebildete Keil eine Höhe von etwa 5% der Tiefe der Nut aufweist. Des Weiteren ist dargestellt, dass der Keil 16 eine im Wesentlichen dreieckförmige Querschnittsform aufweist. Selbstverständlich sind hier aber auch andere Größen und Geometrien möglich.

Die Nutwände 19 und 20 der längs verlaufenden Nut 13 weisen einen äußeren Abschnitt 22 bzw. 23 sowie einen inneren Abschnitt 24 bzw. 25 auf. Hierbei ist zu erkennen, dass der äußere und innere Abschnitt gegenüber der ersten Deckschicht 12 eine jeweils unterschiedliche Neigung aufweisen. Insbesondere ist der innere Abschnitt 24 bzw. 25 der zugeordneten Nutwand 19 bzw. 20 an die Länge der ersten Seitenfläche 26 bzw. 27 des Keils 16 angepasst.

Fig. 1b zeigt das aus der Bauplatte gemäß Fig. 1a letztendlich ausgebildete Eckelement. Wie dargestellt, passt sich der im Bereich des Nutgrundes 21 ursprünglich verbliebene bzw. vorgesehene Keil 16 optimal an den inneren Abschnitt der jeweiligen Nutwände 19 und 20 an. Insbesondere ist die mit dem Eckelement ausgebildete Kante entsprechend abgerundet bzw. gefast, wobei der Grad der Abrundung bzw. Fasung durch die Länge des Nutgrundes 21 festgelegt wird.

Selbstverständlich sind aber auch andere Winkelgrade eines Eckelementes denkbar. Hierbei ist es lediglich erforderlich, die in der Bauplatte eingebrachte Nut 13 sowie den im Bereich des Nutgrundes vorgesehenen Keil 16 entsprechend anzupassen. Auch ist denkbar, dass im Nutgrund mehrere Keile angeordnet sind, um somit eine bessere Abrundung der Kante zu ermöglichen.

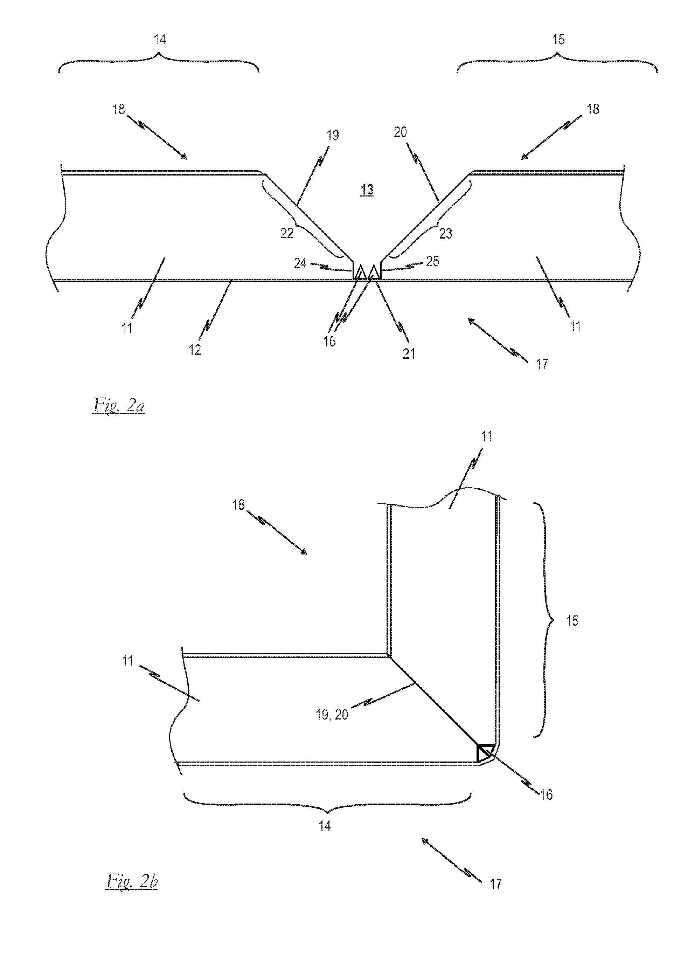

Fig. 2a zeigt eine zweite bevorzugte Ausführungsform der erfindungsgemäßen Bauplatte zur Herstellung eines Eckelements, während in Fig. 2b ein aus der Bauplatte gemäß Fig. 2a ausgebildetes Eckelement dargestellt ist.

Die zweite bevorzugte Ausführungsform unterscheidet sich von der vorstehend beschriebenen und in den Fig. 1a und 1b dargestellten ersten Ausführungsform dadurch, dass nun im Bereich des Nutgrundes 21 insgesamt zwei Keile 16 vorgesehen sind, die jeweils fest mit der Deckschicht 12 verbunden sind und eine geringere Höhe als die Tiefe der Nut 13 aufweisen. Die Apizes der Keile 16 der zweiten bevorzugten Ausführungsform sind - im Vergleich zum Apex des Keils 16 der ersten Ausführungsform - entsprechend spitzer ausgeführt, um zu erreichen, dass das letztendlich ausgebildete und in Fig. 2b dargestellte Eckelement ein 90°-Eckelement ist.

In diesem Zusammenhang sei darauf hingewiesen, dass die letztendlich erreichte Krümmung des Eckelements bei einem einzigen Keil 16 (vgl. Fig. 1a, 1b) durch den Apexwinkel des Keils 16 und bei mehreren Keilen 16 (vgl. Fig. 2a, 2b) durch die Summe der jeweiligen Apexwinkel der im Nutgrund vorgesehenen Keile 16 bestimmt wird. So weist beispielsweise der Keil 16 in der Fig. 1a einen rechtwinkligen Apexwinkel auf, was zur Folge hat, dass das in Fig. 1b dargestellte ausgebildete Eckelement eine 90°-Krümmung beschreibt. Andererseits weist in der zweiten Ausführungsform gemäß Fig. 2a jeder der beiden Keile 16 einen Apexwinkel von 45° auf. Das daraus gebildete Eckelement beschreibt gemäß Fig. 2a somit ebenfalls eine 90°-Krümmung. Das Profil dieser Krümmung ist allerdings im Verglich zur Fig. 1b noch weiter abgerundet. In dem Fall, wenn im Nutgrund mehrere Keile 16 vorliegen, müssen die Keile selbstverständlich nicht identisch zueinander ausgebildet sein.

Des weiteren ist es möglich, das Profil der Kante beim ausgebildeten Eckelement durch unterschiedliche Wahl der Basislänge des im Bereich des Nutgrundes vorgesehenen zumindest einen Keils 16 zu beeinflussen. So führt beispielsweise eine relativ kurze Basislänge des Keils 16 zu einer schärfen Abrundung bzw. Abfasung der Kante.

Die Erfindung zeichnet sich insbesondere dadurch aus, dass durch das Vorsehen von zumindest einem fest mit der Deckschicht 12 verbundenen Keil 16 im Bereich des Nutgrundes 21 auf besonders einfache Weise ein Eckprofil gebildet werden kann, wobei das Eckprofil eine abgerundete bzw. gefaste Kante aufweist. Die Außenfläche der Kante wird durch das Material der Deckschicht 12 gebildet. Dadurch, dass das Profil der Kante abgerundet ist, kann in wirkungsvoller Weise verhindert werden, dass die beim Verschwenken der ersten und zweiten Plattenabschnitte 15, 16 in der Deckschicht 12 auftretenden Zugkräfte einen kritischen Wert überschreiten, der zur Zerstörung der Deckschicht führt. Somit eignet sich die erfindungsgemäße Lösung auch ideal für Gipsfaserplatten, deren Deckschicht ein Gewebe aufweist, das beispielsweise entsprechend der Brandschutzauflagen bestimmte Anforderungen erfüllen muss, und das insbesondere nicht beschädigt werden darf.

Obwohl die vorliegende Erfindung im Zusammenhang mit Bauplatten beschrieben wurde, die üblicherweise im Bauwesen insbesondere zur Isolierung und Verkleidung von Wänden oder Decken eingesetzt werden, ist es auch denkbar, aus dem Bauplattenmaterial andere Gegenstände, wie beispielsweise Möbelstücke herzustellen. Dies ist insbesondere dadurch möglich, dass erfindungsgemäß eine Bauplatte bzw. ein Verfahren angegeben werden, mit denen beliebige Ecken und Abrundungen aus einer einzigen Bauplatte gebildet werden können.

Es sei darauf hingewiesen, dass die Ausführung der Erfindung nicht auf die in den Figuren beschriebenen Ausführungsbeispiele beschränkt ist, sondern auch in einer Vielzahl von Varianten möglich ist.

### Bezugszeichenliste

- 11: Kern
- 12: Deckschicht
- 13: Nut
- 14: erster Plattenabschnitt
- 15: zweiter Plattenabschnitt
- 16: Keil
- 17: Vorderseite
- 18: Rückseite
- 19, 20: Nutwände
- 21: Nutgrund
- 22, 23: äußerer Abschnitt (Nutwände)
- 24, 25: innerer Abschnitt (Nutwände)
- 26, 27: Seitenflächen (Keil)
- 28: Profilelement

## Patentansprüche

1. Bauplatte mit einer Vorderseite (17) sowie einer Rückseite (18) zur Herstellung eines Eckelementes, wobei die Bauplatte mindestens einen Kern (11) sowie mindestens eine die Vorderseite (17) ausbildende erste Deckschicht (12) umfasst, wobei eine längs verlaufende Nut (13) mit zwei gegenüberliegenden Nutwänden (19, 20) sowie einem dazwischen angeordneten Nutgrund (21) von der der ersten Deckschicht (12) gegenüberliegenden Rückseite (18) her in die Bauplatte eingearbeitet ist und die Bauplatte in einen ersten Plattenabschnitt (14) und einen zweiten Plattenabschnitt (15) unterteilt, wobei der erste Plattenabschnitt (14) und der zweite Plattenabschnitt (15) im Bereich der Nut (13) im Wesentlichen nur durch die den ersten Plattenabschnitt (14) und den zweiten Plattenabschnitt (15) übergreifende Deckschicht (12) miteinander verbunden sind,
**dadurch gekennzeichnet, dass**
im Bereich des Nutgrundes (21) fest mit der Deckschicht (12) verbunden mindestens ein aus dem Material des Kerns (11) gebildeter Keil (16) mit einer gegenüber der Tiefe der Nut (13) geringeren Höhe verbleibt.

2. Bauplatte mit einer Vorderseite (17) sowie einer Rückseite (18) zur Herstellung eines Eckelementes, wobei die Bauplatte mindestens einen Kern (11) sowie mindestens eine die Vorderseite (17) ausbildende erste Deckschicht (12) umfasst, wobei eine längs verlaufende Nut (13) mit zwei gegenüberliegenden Nutwänden (19, 20) sowie einem dazwischen angeordneten Nutgrund (21) von der der ersten Deckschicht (12) gegenüberliegenden Rückseite (18) her in die Bauplatte eingearbeitet ist und die Bauplatte in einen ersten Plattenabschnitt (14) und einen zweiten Plattenabschnitt (15) unterteilt, wobei der erste Plattenabschnitt (14) und der zweite Plattenabschnitt (15) im Bereich der Nut (13) im Wesentlichen nur durch die den ersten Plattenabschnitt (14) und den zweiten Plattenabschnitt (15) übergreifende Deckschicht (12) miteinander verbunden sind,
**dadurch gekennzeichnet, dass**
im Bereich des Nutgrundes ein Keil (16) oder ein Profilelement (28) vorgesehen bzw. eingesetzt ist, und wobei die Deckschicht ein Gewebe, insbesondere Kunststoff-, Glasfaser-, Polypropylen oder textiles Gewebe, umfasst.

3. Bauplatte nach Anspruch 1 oder 2,
**dadurch gekennzeichnet,**
**dass** der Keil (16) eine Höhe zwischen 5% und 20%, vorzugsweise etwa 10% der Tiefe der Nut (13) aufweist.

4. Bauplatte nach einem der Ansprüche 1 bis 3,
**dadurch gekennzeichnet,**
**dass** der Keil (16) eine im Wesentlichen dreieckförmige Querschnittsform aufweist.

5. Bauplatte nach einem der Ansprüche 1 bis 4,
**dadurch gekennzeichnet,**
**dass** die Nutwände (19, 20) jeweils einen äußeren Abschnitt (22, 23) sowie einen inneren Abschnitt (24, 25) umfassen, wobei äußere und innere Abschnitte (22, 23; 24, 25) gegenüber der ersten Deckschicht (12) eine jeweils unterschiedliche Neigung aufweisen.

6. Bauplatte nach Anspruch 5,
**dadurch gekennzeichnet,**
**dass** der Keil (16) eine erste Seitenfläche (26) sowie eine zweite Seitenfläche (27) aufweist, wobei die Länge der ersten Seitenfläche (26) bzw. der zweiten Seitenfläche (27) jeweils der Länge des zugeordneten inneren Abschnitts (24, 25) der zugeordneten Nutwand entspricht.

7. Eckelement gebildet aus einer Bauplatte nach einem der Ansprüche 1 bis 6,
**dadurch gekennzeichnet,**
**dass** der erste Plattenabschnitt (14) und der zweite Plattenabschnitt (15) in einem vorbestimmten Winkel, insbesondere einen 90°-Winkel, über die Nutwände (19, 20), sowie den dazwischen befindlichen Keil (16), bzw. das dort vorgesehene bzw. eingesetzte Profilelement (28), sowie über eine eingebrachte Verbindungssubstanz gegeneinander festgelegt sind.

8. Verfahren zur Herstellung eines Eckelements aus einer Bauplatte mit einer Vorderseite (17) sowie einer Rückseite (18), wobei die Bauplatte mindestens einen Kern (11) sowie mindestens eine die Vorderseite (17) ausbildende erste Deckschicht (12) umfasst, wobei eine längs verlaufende Nut (13) mit zwei gegenüberliegenden Nutwänden (19, 20) sowie einem dazwischen angeordneten Nutgrund (21) von der der ersten Deckschicht (12) gegenüberliegenden Rückseite (18) her in die Bauplatte eingearbeitet ist und die Bauplatte in einen ersten Plattenabschnitt (14) und einen zweiten Plattenabschnitt (15) unterteilt, wobei der erste Plattenabschnitt (14) und der zweite Plattenabschnitt (15) im Bereich der Nut (13) im Wesentlichen nur durch die den ersten Plattenabschnitt (14) und den zweiten Plattenabschnitt (15) übergreifende Deckschicht (12) miteinander verbunden sind, wobei im Bereich des Nutgrundes (21) fest mit der Deckschicht (12) verbunden mindestens ein aus dem Material des Kerns (11) gebildeter Keil (16) mit einer gegenüber der Tiefe der Nut (13) geringeren Höhe verbleibt, **gekennzeichnet durch** folgende Schritte:
- Einbringen eines Verbindungsmittels, insbesondere einer Verbindungssubstanz wie beispielsweise Leim in die längs verlaufende Nut (13), und
- Verschwenken des ersten Plattenabschnitt (14) und zweiten Plattenabschnitt (15) aufeinander zu, bis ein insbesondere **durch** den Verlauf der Nutwände (19, 20) vorbestimmter Winkel erreicht ist, so dass erster Plattenabschnitt (14) und zweiter Plattenabschnitt (15) in dieser Anordnung in der Ausbildung eines Eckelements gegeneinander fixiert werden.

9. Verfahren zur Herstellung eines Eckelements aus einer Bauplatte mit einer Vorderseite (17) sowie einer Rückseite (18) zur Herstellung eines Eckelementes, wobei die Bauplatte mindestens einen Kern (11) sowie mindestens eine die Vorderseite (17) ausbildende erste Deckschicht (12) umfasst, wobei eine längs verlaufende Nut (13) mit zwei gegenüberliegenden Nutwänden (19, 20) sowie einem dazwischen angeordneten Nutgrund (21) von der der ersten Deckschicht (12) gegenüberliegenden Rückseite (18) her in die Bauplatte eingearbeitet ist und die Bauplatte in einen ersten Plattenabschnitt (14) und einen zweiten Plattenabschnitt (15) unterteilt, wobei der erste Plattenabschnitt (14) und der zweite Plattenabschnitt (15) im Bereich der Nut (13) im Wesentlichen nur durch die den ersten Plattenabschnitt (14) und den zweiten Plattenabschnitt (15) übergreifende Deckschicht (12) miteinander verbunden sind, wobei im Bereich des Nutgrundes ein Keil (16) oder ein Profilelement (28) vorgesehen bzw. eingesetzt ist und wobei die Deckschicht ein Gewebe, insbesondere Kunststoff-, Glasfaser-, Polypropylen oder textiles Gewebe umfasst,
**gekennzeichnet durch** folgende Schritte:
- Einbringen eines Verbindungsmittels, insbesondere einer Verbindungssubstanz wie beispielsweise Leim in die längs verlaufende Nut (13), und
- Verschwenken vom ersten Plattenabschnitt (14) und zweiten Plattenabschnitt (15) aufeinander zu, bis ein insbesondere **durch** den Verlauf der Nutwände (19, 20) vorbestimmter Winkel erreicht ist, so dass erster Plattenabschnitt (14) und zweiter Plattenabschnitt (15) in dieser Anordnung in der Ausbildung eines Eckelements gegeneinander fixiert werden.
